# EUROPÄISCHE PATENTSCHRIFT

(11) **EP 3 449 141 B1**
(45) Veröffentlichungstag und Bekanntmachung des Hinweises auf die Patenterteilung: **25.12.2019**
(21) Anmeldenummer: 17749120.6
(22) Anmeldetag: 18.07.2017
(51) Int. Cl.: F16C 25/08, F16C 35/067, F16C 35/063

(54) **WÄLZLAGERANORDNUNG UND RÖNTGENRÖHRENLAGERUNG**
ROLLING BEARING ARRANGEMENT AND X-RAY TUBE BEARING
ENSEMBLE À PALIERS À ROULEMENT ET SUPPORT DE TUBE À RAYONS X

(30) Priorität: 19.07.2016 DE 102016008824
(43) Veröffentlichungstag der Anmeldung: 06.03.2019
(73) Patentinhaber: Gebrüder Reinfurt GmbH & Co. KG, 97222 Rimpar (DE)
(72) Erfinder: MAY, Wolfgang, 97318 Kitzingen (DE)
(74) Vertreter: Müller-Boré & Partner Patentanwälte PartG mbB
(86) Internationale Anmeldenummer: PCT/EP2017/000870
(87) Internationale Veröffentlichungsnummer: WO 2018/015011

(56) Entgegenhaltungen:
- DE-A1- 2 032 111
- DE-A1- 4 135 565
- DE-A1- 19 804 328
- DE-T2- 60 203 651

## Beschreibung

Die vorliegende Erfindung bezieht sich auf eine Wälzlageranordnung und eine Röntgenröhrenlagerung mit einer derartigen Wälzlageranordnung.

In manchen Anwendungen, wie beispielsweise medizinischen Geräten oder empfindlichen elektronischen Geräten, wie Röntgenröhren, kann an einer Wälzlageranordnung kein Schmierstoff verwendet werden, um Verschmutzungen zu vermeiden. Demgemäß werden die verwendeten Wälzlager sehr heiß und verschleißen in kurzer Zeit. Wünschenswert wäre daher eine schmierstofffreie Wälzlageranordnung mit einer erhöhten Lebensdauer.

DE 198 04 328 A1 offenbart eine axiale Fixierung eines eine Welle aufnehmenden Wälzlagers zur Verwendung in einem Drehstromgenerator für Kraftfahrzeuge. Dabei ist der Läufer der Elektromaschine spielfrei axial gelagert, indem eine Wellfeder als elastisches Element gegen den Aussenring des Wälzlagers drückt, um das Axialspiel zu eliminieren. Der Innenring ist dabei an der Welle axial fixiert und eine federnde Scheibe liegt an dem Innenring an, an welche sich die mit radial nach außen weisenden Krallen versehene Federscheibe anlegt. Demgemäß ist der Aussenring des Wälzlagers axial verschieblich und wird durch die Federscheibe so verschoben, dass das Axialspiel verschwindet, während der Innenring des Wälzlagers fix auf der Welle angeordnet ist.

DE 602 03 651 T2 offenbart eine Präzisionsspindel mit geringer Reibung mit einem ersten und einem zweiten Wälzlager, die hohe Drehzahlen ermöglicht.

Die Aufgabe der Erfindung besteht in der Bereitstellung einer Wälzlageranordnung, die ohne Schmierstoffe auskommt und dabei eine hohe Lebensdauer aufweist.

Diese Aufgabe wird durch die Merkmale der unabhängigen Ansprüche gelöst. Vorteilhafte Weiterbildungen der Erfindung sind in den abhängigen Ansprüchen definiert.

Nach einem ersten Gesichtspunkt wird eine Wälzlageranordnung mit folgenden Bauteilen zur Verfügung gestellt:
einem Gehäuse, einer Welle, die relativ zu dem Gehäuse drehbar ist, und ein erstes Wälzlager und ein zweites Wälzlager zum drehenden Abstützen der Welle in dem Gehäuse,
wobei das erste Wälzlager als Festlager ausgeführt ist, indem ein Aussenring des ersten Wälzlagers ortsfest in dem Gehäuse angeordnet ist und ein Innenring des ersten Wälzlagers fest mit der Welle verbunden ist, so dass Innen- und Aussenring sich weder verdrehen noch axial verschieblich sind,
wobei das zweite Wälzlager als Loslager ausgeführt ist, indem der Aussenring des zweiten Wälzlagers axial verschieblich in dem Gehäuse angeordnet ist und der Innenring des zweiten Wälzlagers axial verschieblich mit der Welle verbunden ist, und
wobei sowohl der Aussenring als auch der Innenring des zweiten Wälzlagers durch jeweils ein Vorspannmittel in axialer Richtung zu dem ersten Wälzlager hin gedrückt werden, um ein Verdrehen des Aussenrings gegenüber dem Gehäuse und ein Verdrehen des Innenrings gegenüber der Welle aufgrund der durch die Vorspannung erzeugten Reibung zu verhindern.

Indem das zweite Wälzlager als Loslager ausgeführt ist, bei dem sowohl der Aussenring als auch der Innenring axial verschieblich ist, können Wärmedehnungen aufgrund der durch das Fehlen des Schmierstoffs auftretenden hohen Temperaturen derart aufgenommen werden, dass keine hohen Flächenpressungen zwischen den Wälzkörpern der Wälzlager und den in Innen- und Aussenring angeordneten Lagerschalen der Wälzlager auftreten.

Dabei ist sowohl der Innenring als auch der Aussenring in axialer Richtung durch das Vorspannmittel vorgespannt, so dass der Außen- und Innenring des Loslagers trotz der Spielpassung in seinem Lagersitz in dem Gehäuse bzw. auf der Welle drehfest fixiert wird bzw. sich nicht relativ gegenüber der Welle bzw. dem Gehäuse drehen kann. Andererseits ist eine axiale Bewegung des Innenrings und des Aussenrings des Loslagers durch die Spielpassung derselben möglich. In anderen Worten ist eine Verschiebung des Loslagers, d.h. des Innenrings und des Aussenrings des Loslagers in axialer Richtung zum Aufnehmen von Wärmedehnungen möglich, während eine Relativdrehung des Innenrings gegenüber der Welle bzw. eine Relativdrehung des Aussenrings gegenüber dem Gehäuse durch die Vorspannmittel verhindert wird.

Auf diese Weise entstehen keine hohen Flächenpressungen, d.h. keine übermäßig hohen Flächenpressungen zwischen den Wälzkörpern der Wälzlager und den Lagerschalen derselben. Somit wird auch ohne die ansonsten erforderliche Schmierung eine hohe Lebensdauer der Lageranordnung gewährleistet.

Als Wälzlager werden vorzugsweise angestellte Lager, wie beispielsweise Schrägkugellager oder Kegelrollenlager verwendet. Dadurch können sowohl radiale als auch axiale Kräfte aufgenommen werden. Dabei wird das Prinzip der angestellten Lagerung entweder in der O-Anordnung oder in der X-Anordnung angewandt.

Vorzugsweise wird die O-Anordnung angewandt, weil sich aus dieser ein geringeres Kippspiel ergibt. Maßgeblich für den Lagerabstand ist dabei der Abstand der Druckmittelpunkte. Bei der O-Anordnung fehlt dem Aussenring jeweils eine Schulter und zwar auf der dem anderen Lager entgegengesetzten Seite. Im Gegensatz hierzu fehlt bei der X-Anordnung dem Aussenring die Schulter auf der dem jeweils anderen Lager zugewandten Seite. O-Anordnungen und X-Anordnungen von angestellten Lagern sind dem Fachmann gut bekannt, so dass sich weitere Erörterungen hierzu erübrigen.

Vorzugsweise reguliert eine Hülse in Anlage an die beiden Aussenringe den axialen Abstand zwischen dem ersten und zweiten Wälzlager. Auf diese Weise kann eine zylindrische Aufnahme in dem Gehäuse über die gesamte Länge denselben Durchmesser haben, weil sich das Loslager über die Hülse an dem Aussenring des Festlagers abstützen kann. In anderen Worten ist der Aussenring des Loslagers über die Hülse an dem Aussenring des Festlagers abgestützt und wird von der der Hülse entgegengesetzten Seite über das Vorspannmittel in Richtung zu der Hülse bzw. in Richtung zu dem Festlager vorgespannt.

Beim Auftreten von Wärmedehnung kann somit der Aussenring des Loslagers innerhalb der zylindrischen Aufnahme des Gehäuses axial hin und herwandern.

Weiter bevorzugt drückt die Hülse den Aussenring des ersten Wälzlagers durch das Vorspannmittel so gegen einen im Gehäuse angeordneten ersten Sicherungsring, dass der Aussenring des ersten Wälzlagers drehfest im Gehäuse sitzt. Somit kann auf einen bei Festlagern sonst üblichen Preßsitz des Aussenrings im Gehäuse verzichtet werden, so dass sich die Wälzlageranordnung leichter montieren lässt, indem die Welle mit den daran angeordneten Wälzlagern einfach in das Gehäuse eingeschoben wird und mit dem ersten Sicherungsring in axialer Richtung positioniert wird.

Vorzugsweise sind die Vorspannmittel als eine erste Spiralfeder zum axialen Belasten bzw. Drücken des Aussenrings des Loslagers sowie als eine zweite Spiralfeder zum axialen Belasten bzw. Drücken des Innenrings des Loslagers ausgebildet. Dabei ist die erste Spiralfeder vorzugsweise koaxial zu der zweiten Spiralfeder derart angeordnet, dass die zweite im Durchmesser kleinere Spiralfeder innerhalb der ersten Spiralfeder angeordnet ist. Die Erfindung ist jedoch nicht auf die Anwendung von Spiralfedern zum Ausbilden des Vorspannmittels beschränkt, sondern es kann jedes andere bekannte Vorspannmittel verwendet werden, wie beispielsweise eine Tellerfeder, ein elastischer Gummiblock oder dergleichen.

Weiter bevorzugt hat die erste Spiralfeder zum Vorspannen des Aussenrings eine höhere Federkonstante als die zweite Spiralfeder zum Vorspannen des Innenrings des Loslagers. Auf diese Weise wird der Aussenring auf sichere Weise drehfest in der zylindrischen Aufnahme des Gehäuses gehalten, während andererseits der Innenring drehfest auf der Welle gehalten wird, ohne eine übermäßig hohe Druckbelastung auf die Wälzkörper des Wälzlagers sowie die Lagerschalen des Innen- und Aussenrings aufzubringen.

Vorzugsweise ist der Aussenring des ersten Wälzlagers durch eine Klemmung zwischen dem ersten Sicherungsring und der Hülse und/oder über einen Preßsitz im Gehäuse drehfest montiert, während der Innenring des das Festlager bildenden ersten Wälzlagers über einen Preßsitz auf der Welle drehfest montiert ist. In anderen Worten ist ein Außendurchmesser des Aussenrings des Festlagers geringfügig kleiner oder größer als ein Innendurchmesser der zylindrischen Aufnahme des Gehäuses. Des weiteren ist ein Außendurchmesser der Welle geringfügig größer als ein Innendurchmesser des Innenrings des Festlagers. Des Weiteren ist zwischen dem Aussenring des Loslagers und der zylindrischen Aufnahme des Gehäuses ein geringfügiges Spiel vorhanden und es ist auch zwischen der Welle und dem innenring des Loslagers ein geringfügiges Spiel vorhanden bzw. das Loslager hat sowohl bezüglich seines Innenrings als auch bezüglich seines Aussenrings einen Schiebe- oder Spielsitz.

Nach einem weiteren Gesichtspunkt wird eine Wälzlageranordnung mit folgenden Bauteilen zur Verfügung gestellt:
einem Gehäuse,
einer Welle,
einem ersten Wälzlager und einem zweiten Wälzlager zum drehenden Abstützen der Welle in dem Gehäuse,
wobei das erste Wälzlager als Festlager ausgeführt ist, indem ein Aussenring des ersten Wälzlagers ortsfest in dem Gehäuse angeordnet ist und ein innenring des ersten Wälzlagers fest mit der Welle verbunden ist,
wobei das zweite Wälzlager als Loslager ausgeführt ist, indem der Aussenring des zweiten Wälzlagers axial verschieblich in dem Gehäuse angeordnet ist und der Innenring des zweiten Wälzlagers axial verschieblich mit der Welle verbunden ist,
wobei der Aussenring drehfest mit dem Gehäuse verbunden ist, und
der Innenring drehfest mit der Welle verbunden ist und in Richtung zu dem ersten Wälzlager vorgespannt ist.

Dabei kann der Aussenring des zweiten Wälzlagers beispielsweise über eine Passfeder nach DIN 6885 oder einen Keil oder eine Keilverzahnung in dem Gehäuse drehfest aber axial verschieblich angeordnet sein.

Weiter bevorzugt wird die Wälzlageranordnung insbesondere für eine Röntgenröhrenlagerung angewandt, bei der die Wälzlager nicht mit Öl oder Fett geschmiert werden. Darüber hinaus wird die Röntgenröhrenlagerung vorzugsweise im Vakuum betrieben.

Die Erfindung wird nun anhand eines Ausführungsbeispiels unter Bezugnahme auf die beigefügten Zeichnungen näher erläutert.
Figur 1 zeigt einen Schnitt durch eine Wälzlageranordnung mit zwei Schrägkugellagern in O-Anordnung.
Figur 2 zeigt denselben Schnitt wie Figur 1, jedoch handelt es sich bei Figur 2 um eine schematische Zeichnung zum Erläutern des Wirkprinzips.

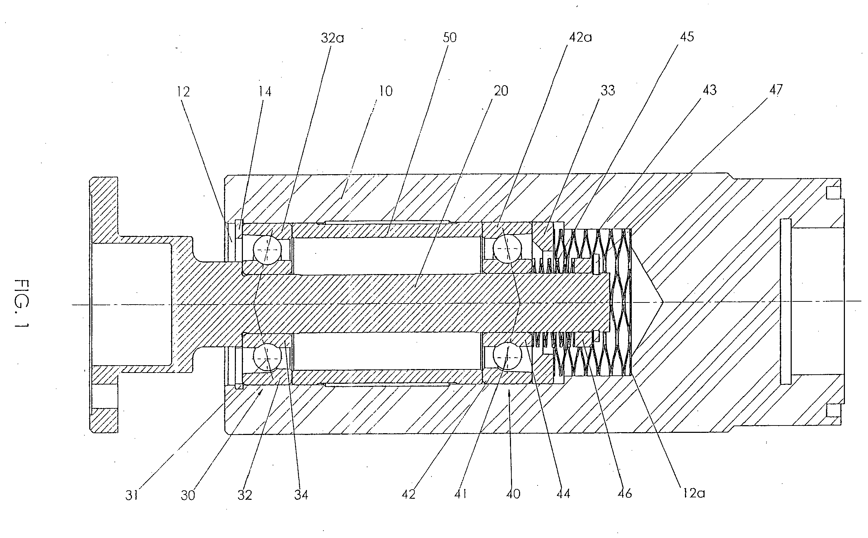

Wie in Figur 1 gezeigt ist, stützt ein Paar Schrägkugellager 30, 40 eine Welle 20 drehend in einer zylindrischen Aufnahme 12 eines Gehäuses 10 ab. Somit kann sich die Welle 20 gegenüber dem Gehäuse 10 drehen und ist durch die O-Anordnung der Schrägkugellager auch in axialer Richtung fixiert.

Das erste Kugellager 30 ist als Festlager ausgebildet, indem ein Innenring 34 des ersten Kugellagers 30 durch einen Preßsitz auf der Welle 20 fixiert ist. In anderen Worten ist ein Außendurchmesser der Welle 20 geringfügig größer als ein Innendurchmesser des Innenrings 34. Darüber hinaus ist ein Aussenring 32 des ersten Kugellagers 30 ortsfest und verdrehsicher in der zylindrischen Aufnahme des Gehäuses 10 montiert, indem der Aussenring 32 zwischen einem ersten Sicherungsring 14 und einer Hülse 50 axial geklemmt und/oder durch einen Preßsitz in der zylindrischen Aufnahme 12 des Gehäuses 10 fixiert ist.

Zum Montieren des Innenrings 34 des ersten Kugellagers 30 wird der Innenring 34 erwärmt und/oder die Welle 20 abgekühlt, um durch die Wärmedehnung die Dimension bzw. den Durchmesser so zu vergrößern bzw. verringern, dass der Innenring 34 des ersten Kugellagers 30 montiert werden kann. Alternativ oder zusätzlich kann durch Aufbringen einer entsprechenden hohen Eindrückkraft der Innenring 34 montiert werden. Dasselbe gilt für den Fall, dass der Aussenring 32 einen Preßsitz in der Aufnahme 12 des Gehäuses 10 hat.

Im vorliegenden Ausführungsbeispiel hat der Aussenring 32 des ersten Kugellagers 30 jedoch eine Spielpassung in der Aufnahme des Gehäuses 10 und ist zwischen dem ersten Sicherungsring 14 und der Hülse 50 axial geklemmt, so dass der Aussenring 32 an einer axial vordefinierten Stelle angeordnet und durch die Klemmkraft gegen Verdrehen gesichert ist. Die Klemmkraft wird durch eine erste Spiralfeder 43 über einen Aussenring 42 des zweiten Kugellagers 40 auf die Hülse 50 in Richtung zu dem ersten Sicherungsring 14 aufgebracht, wie es weiter unten beschrieben ist.

Auf diese Weise ist das erste Kugellager 30 als Festlager ausgebildet und kann sich weder verdrehen noch in axialer Richtung bewegen.

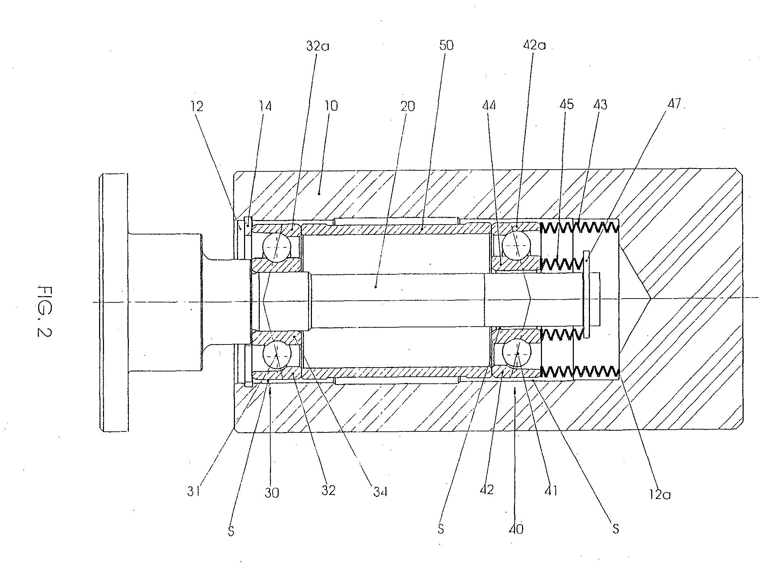

Im Gegensatz hierzu ist das zweite Kugellager 40 als Loslager ausgebildet, indem sowohl der Innenring 44 als auch der Aussenring 42 des zweiten Kugellagers 40 mit Spiel bzw. mit einer Spielpassung eingesetzt sind, wie dies insbesondere in der schematischen Darstellung von Figur 2 dargestellt ist.

Dabei ist jeweils ein Spiel S zwischen dem Aussenring 42 und der zylindrischen Aufnahme 12 vorhanden und des weiteren ist ein Spiel S (Fig. 2) zwischen dem Außendurchmesser der Welle 20 und dem Innenring 44 des zweiten Kugellagers 40 vorhanden. Auf diese Weise kann sich das zweite Kugellager 40 innerhalb der Aufnahme 12 als auch auf der Welle 20 axial bewegen bzw. verschieben. Durch die axiale Verschieblichkeit des zweiten Kugellagers können Wärmedehnungen auf bevorzugte Weise aufgenommen werden.

Nachteilig an dieser Loslagergestaltung ist jedoch, dass der Aussenring 42 sich gegenüber dem Gehäuse 10 und der Innenring 44 gegenüber der Welle 20 verdrehen könnten und somit der Spielsitz verschleißen würde. Dies muß unbedingt verhindert werden.

Somit ist der Aussenring 42 über die erste Spiralfeder 43 und der Innenring 44 über eine zweite Spiralfeder 45 axial mit einer Druckkraft beaufschlagt. Die erste Spiralfeder 43 stützt sich dabei innerhalb des Gehäuses 10 ab, während die zweite Spiralfeder 45 sich an einem zweiten Sicherungsring 47, der an einem Ende der Welle 20 angebracht ist, abstützt. Die aufgebrachte elastische Federkraft erzeugt eine Reibkraft und ist dabei derart gewählt, dass gewährleistet ist, dass sich der Aussenring 42 nicht gegenüber dem Gehäuse 10 verdreht und der Innenring 44 sich nicht gegenüber der Welle 20 verdreht.

Des weiteren benötigt der Aussenring 42 eine axiale Anlage, um der Kraft der ersten Feder 43 entgegenzuwirken. Hierzu ist die Hülse 50 in die zylindrische Aufnahme 12 in einem Zwischenraum zwischen dem ersten Kugellager 30 und dem zweiten Kugellager 40 derart eingesetzt, dass sich der Aussenring 42 des zweiten Kugellagers 40 an dem Aussenring 32 des ersten Kugellagers 30 abstützt. Es entsteht somit eine Klemmung der Aussenringe 32, 42 innerhalb der zylindrischen Aufnahme 12 zum drehenden Festhalten bzw. Fixieren der Aussenringe 32, 42 über die Federkraft der ersten Spiralfeder 43. Eine axiale Bewegung des Aussenrings 42 ist jedoch weiterhin möglich, während der Aussenring 32 des Festlagers durch den ersten Sicherungsring 14 in axialer Richtung festgelegt ist.

Der Innenring 44 jedoch hat keine axiale Abstützung über eine Hülse wie der Aussenring 42, weil der Innenring 44 sich über die Kugeln 41 in dem zweiten Kugellager 40 an dem Aussenring 42 abstützen kann. Die zweite Spiralfeder 45 hat dabei eine geringere Federkraft als die erste Spiralfeder 43, weil eine zu hohe Federkraft der zweiten Spiralfeder 45 zu einer zu hohen Flächenpressung zwischen den Kugeln 41 und den Lagerschalen des Innen- und Aussenrings 42, 44 des zweiten Kugellagers 40 führen würde.

Vorzugsweise hat die erste Spiralfeder 43 eine Federkonstante im Bereich von etwa dem 1,5fachen bis etwa dem vierfachen der Federkonstante der zweiten Spiralfeder 45, weiter bevorzugt liegt der Bereich in etwa bei zwei bis etwa drei.

Obwohl es in der Prinzip-Skizze von Figur 2 nicht gezeigt ist, wird vorzugsweise eine Scheibe 33 zwischen der ersten Spiralfeder 43 und dem Aussenring 42 des zweiten Kugellagers 40 angeordnet, um eine flächige und gleichmäßige Druckkraft auf den Aussenring 42 auszuüben. Des weiteren ist vorzugsweise ein Anstellring 46 zwischen der zweiten Spiralfeder 45 und dem zweiten Sicherungsring 47 angeordnet, um hier ebenfalls eine gleichmäßige Pressung auf den Innenring 44 des zweiten Kugellagers 40 auszuüben.

In dem gezeigten Ausführungsbeispiel sind die Schrägkugellager 30, 40 in der O-Anordnung angeordnet, bei der der Aussenring 32 des ersten Kugellagers 30 eine Schulter 32a auf der dem zweiten Kugellager 40 zugewandten Seite hat aber keine Schulter an der entgegengesetzten Seite. Des weiteren hat das zweite Kugellager 40 und dessen Aussenring 42 auf der dem ersten Kugellager 30 zugewandten Seite eine Schulter 42a, während auf der entgegengesetzten Seite des Aussenrings 42 die Schulter wiederum fehlt.

Die Erfindung ist jedoch nicht auf diese O-Anordnung beschränkt, sondern kann auch auf eine X-Anordnung der Schrägkugellager 30, 40 angewandt werden. In diesem Fall ist die Schulter 32a bzw. 42a jeweils auf der dem anderen Kugellager entgegengesetzten Seite angeordnet, d.h. auf der Seite, auf der in dem Ausführungsbeispiel keine Schulter angeordnet ist. Dafür fehlt bei der X-Anordnung die Schulter auf der dem anderen Lager zugewandten Seite.

Da dem Fachmann das Prinzip von angestellten Lagern in O-Anordnung und X-Anordnung gut bekannt ist, soll hier nicht weiter darauf eingegangen werden.

Obwohl das Ausführungsbeispiel die Schrägkugellager 30, 40 als Wälzlager aufweist, können auch andere Wälzlager angewandt werden, insbesondere Wälzlager, die angestellt werden können, wie beispielsweise Kegelrollenlager.

Die Erfindung ist auch nicht auf die Anwendung von Spiralfedern 43, 45 zum axialen Belasten des Innenrings 44 und der Aussenringe 32, 42 beschränkt, sondern es kann auch eine Tellerfeder oder jedes andere elastische Element, wie beispielsweise ein Gummiblock oder dergleichen, zum Aufbringen der elastischen Axialkraft angewandt werden.

Obwohl in dem Ausführungsbeispiel sowohl die Aussenringe 32, 42 als auch der Innenring 44 des zweiten Kugellagers jeweils mit der Spiralfeder 43, 45 gegen Verdrehen gesichert sind, kann die erste Spiralfeder 43 zum Sichern der Aussenringe 32, 42 auch durch eine Passfeder nach DIN 6885 oder einen Keil oder eine Kerb- oder Keilverzahnung ersetzt werden, um ein Verdrehen der Aussenringe 32, 42 zu verhindern und gleichzeitig eine axiale Verschiebung des Aussenrings 42 zu ermöglichen.

Vorzugsweise hat die zylindrische Aufnahme 12 einen durchgängigen Durchmesser und der Außendurchmesser des Aussenrings 42 des zweiten Kugellagers 40 ist im Wesentlichen gleich dem des Aussenrings 32 des ersten Kugellagers 30, so dass beide Aussenringe 32, 42 mit dem Spiel S in die zylindrische Aufnahme 12 eingesetzt werden können. Alternativ oder zusätzlich kann der Aussenring 32 des ersten Kugellagers 30 mit einem Preßsitz in die Aufnahme 12 eingesetzt werden. Weiter bevorzugt ist die zylindrische Aufnahme 12 als Sackloch ausgebildet, so dass eine entsprechende Anlage 12a für die erste Spiralfeder 43 am Ende des Sacklochs bereitgestellt ist. Die axiale Anlage 12a der ersten Spiralfeder 43 kann aber auch durch eine Scheibe, eine Schraube, Mutter oder dergleichen bereitgestellt werden.

### Bezugszeichenliste

- 10: Gehäuse
- 12: Aufnahme
- 12a: Anlage
- 14: erster Sicherungsring
- 20: Welle
- 30: erstes Kugellager
- 31: Kugel
- 32: Aussenring
- 32a: Schulter
- 33: Scheibe
- 34: Innenring
- 40: zweites Kugellager
- 41: Kugel
- 42: Aussenring
- 42a: Schulter
- 43: erste Spiralfeder
- 44: Innenring
- 45: zweite Spiralfeder
- 46: Anstellring
- 47: zweiter Sicherungsring
- 50: Hülse
- S: Spiel

## Patentansprüche

1. Wälzlageranordnung mit:
einem Gehäuse (10),
einer Welle (20),
einem ersten Wälzlager und einem zweiten Wälzlager zum drehenden Abstützen der Welle (20) in dem Gehäuse (10),
wobei das erste Wälzlager als Festlager ausgeführt ist, indem ein Aussenring (32) des ersten Wälzlagers ortsfest in dem Gehäuse (10) angeordnet ist und ein Innenring (34) des ersten Wälzlagers fest mit der Welle (20) verbunden ist,
wobei das zweite Wälzlager als Loslager ausgeführt ist, indem der Aussenring (42) des zweiten Wälzlagers axial verschieblich in dem Gehäuse (10) angeordnet ist und der Innenring (44) des zweiten Wälzlagers axial verschieblich mit der Welle (20) verbunden ist, **dadurch gekennzeichnet, dass**
sowohl der Aussenring (42) als auch der Innenring (44) des zweiten Wälzlagers jeweils durch ein Vorspannmittel in axialer Richtung zu dem ersten Wälzlager hin gedrückt werden, um ein Verdrehen des Aussenrings (42) gegenüber dem Gehäuse (10) und ein Verdrehen des Innenrings (44) gegenüber der Welle (20) zu verhindern.

2. Wälzlageranordnung nach Anspruch 1, wobei die Wälzlager als angestellte Lager, insbesondere als Schrägkugellager (30, 40) in O-Anordnung oder X-Anordnung, ausgeführt sind.

3. Wälzlageranordnung nach einem der vorherigen Ansprüche, wobei eine Hülse (50) den axialen Abstand zwischen den Aussenringen (32, 42) des ersten und zweiten Wälzlagers reguliert und/oder den Aussenring (32) des ersten Wälzlagers durch das Vorspannmittel so gegen einen im Gehäuse (10) angeordneten ersten Sicherungsring (14) drückt, dass der Aussenring (32) des ersten Wälzlagers drehfest im Gehäuse (10) sitzt.

4. Wälzlageranordnung nach einem der vorherigen Ansprüche, wobei das Vorspannmittel des Aussenrings (42) des zweiten Wälzlagers eine erste Spiralfeder (43) ist und das Vorspannmittel des Innenrings (44) des zweiten Wälzlagers eine zweite Spiralfeder (45) ist, die vorzugsweise koaxial zu der ersten Spiralfeder (43) und dabei vorzugsweise innerhalb der ersten Spiralfeder (43) angeordnet ist.

5. Wälzlageranordnung nach Anspruch 4, wobei die erste Spiralfeder (43) eine höhere Federkonstante als die zweite Spiralfeder (45) aufweist.

6. Wälzlageranordnung nach einem der vorherigen Ansprüche, wobei das Verhältnis der Federkonstante der ersten Spiralfeder (43) zu der Federkonstante der zweiten Spiralfeder (45) im Bereich von etwa 1,5 bis etwa 4, vorzugsweise im Bereich von etwa 2 bis etwa 3, liegt.

7. Wälzlageranordnung nach einem der vorherigen Ansprüche 4 bis 6, wobei die erste Spiralfeder (43) in dem Gehäuse (10) abgestützt ist und/oder die zweite Spiralfeder (45) über einen Anstellring (46) und/oder einen Sicherungsring (47) an der Welle abgestützt ist.

8. Wälzlageranordnung nach einem der vorherigen Ansprüche, wobei der Aussenring (32) des ersten Wälzlagers durch eine Klemmung zwischen dem ersten Sicherungsring (14) und der Hülse (50) und/oder durch einen Presssitz im Gehäuse (10) drehfest montiert ist und der Innenring (34) des das Festlager bildenden ersten Wälzlagers über einen Presssitz auf der Welle (20) drehfest montiert ist und/oder das Loslager jeweils über einen Gleitsitz in dem Gehäuse (10) und der Welle (20) axial verschiebbar und nicht drehfest montiert ist.

9. Wälzlageranordnung mit:
einem Gehäuse (10),
einer Welle (20),
einem ersten Wälzlager und einem zweiten Wälzlager zum drehenden Abstützen der Welle (20) in dem Gehäuse (10),
wobei das erste Wälzlager als Festlager ausgeführt ist, indem ein Aussenring (32) des ersten Wälzlagers ortsfest in dem Gehäuse (10) angeordnet ist und ein Innenring (34) des ersten Wälzlagers fest mit der Welle (20) verbunden ist,
wobei das zweite Wälzlager als Loslager ausgeführt ist, indem der Aussenring (42) des zweiten Wälzlagers axial verschieblich in dem Gehäuse (10) angeordnet ist und der Innenring (44) des zweiten Wälzlagers axial verschieblich mit der Welle (20) verbunden ist, **dadurch gekennzeichnet, dass**
der Aussenring (42) drehfest mit dem Gehäuse (10) verbunden ist, und
der Innenring (44) drehfest mit der Welle (20) verbunden ist und in Richtung zu dem ersten Wälzlager vorgespannt ist.

10. Röntgenröhrenlagerung mit einer Wälzlageranordnung nach einem der vorherigen Ansprüche, wobei keine Schmierstoffe für die Schmierung der Wälzlageranordnung verwendet werden und/oder die Wälzlageranordnung im Vakuum betrieben wird.

## Claims

1. A rolling bearing assembly, comprising:
a housing (10),
a shaft (20),
a first rolling bearing and a second rolling bearing for rotatably supporting the shaft (20) in the housing (10),
wherein the first rolling bearing is designed as a fixed bearing by an outer ring (32) of the first rolling bearing being stationarily arranged in the housing (10) and an inner ring (34) of the first rolling bearing being fixedly connected to the shaft (20),
wherein the second rolling bearing is designed as a floating bearing by the outer ring (42) of the second rolling bearing being arranged axially displaceable in the housing (10) and the inner ring (44) of the second rolling bearing being axially displaceably connected to the shaft (20), **characterized in that**
both the outer ring (42) and the inner ring (44) of the second rolling bearing are each pushed toward the first rolling bearing by a respective biasing means in the axial direction to prevent rotational movement of the outer ring (42) with respect to the housing (10) and rotational movement of the inner ring (44) with respect to the shaft (20).

2. The rolling bearing assembly according to claim 1, wherein the rolling bearings are designed as preloaded bearings, in particular as angular contact ball bearings (30, 40), in O-arrangement or X-arrangement.

3. The rolling bearing assembly according to one of the preceding claims, wherein a sleeve (50) regulates the axial distance between the outer rings (32, 42) of the first and second rolling bearings and/or pushes the outer ring (32) of the first rolling bearing against a first locking ring (14) arranged in the housing (10) by the biasing means such that the outer ring (32) of the first rolling bearing is fixed against rotation in the housing.

4. The rolling bearing assembly according to one of the preceding claims, wherein the biasing means of the outer ring (42) of the second rolling bearing is a first coil spring (43) and the biasing means of the inner ring (44) of the second rolling bearing is a second coil spring (45), which is preferably arranged coaxially to the fist coil spring (43) and preferably within the first coil spring (43).

5. The rolling bearing assembly according to claim 4, wherein the first coil spring (43) has a higher spring constant than the second coil spring (45).

6. The rolling bearing assembly according to one of the preceding claims, wherein the ratio of the spring constant of the first coil spring (43) to the spring constant of the second coil spring (45) is in the range of about 1.5 to about 4, preferably in the range of about 2 to about 3.

7. The rolling bearing assembly according to one of the preceding claims 4 to 6, wherein the first coil spring (43) is supported in the housing (10) and/or the second coil spring (45) is supported on the shaft via a positioning ring (46) and/or a locking ring (47).

8. The rolling bearing assembly according to one of the preceding claims, wherein the outer ring (32) of the first rolling bearing is fixed against rotation via a clamping between the first locking ring (14) and the sleeve (50) and/or via a press fit in the housing (10), and the inner ring (34) of the first rolling bearing forming the first fixed bearing is fixed against rotation on the shaft (20) via a press fit and/or the floating bearing is axially displaceable and not fixed against rotation in the housing (10) and the shaft (20) via a sliding fit.

9. A rolling bearing assembly, comprising:
a housing (10),
a shaft (20),
a first rolling bearing and a second rolling bearing for rotatably supporting the shaft (20) in the housing (10),
wherein the first rolling bearing is designed as a fixed bearing by an outer ring (32) of the first rolling bearing being stationarily arranged in the housing (10) and an inner ring (34) of the first rolling bearing being fixedly connected to the shaft (20),
wherein the second rolling bearing is designed as a floating bearing by the outer ring (42) of the second rolling bearing being arranged axially displaceable in the housing (10) and the inner ring (44) of the second rolling bearing being axially displaceably connected to the shaft (20), **characterized in that**
the outer ring (42) is connected to the housing (10) in a manner fixed against rotation, and
the inner ring (44) is connected to the shaft (20) in a manner fixed against rotation and is biased toward the first rolling bearing.

10. An X-ray tube bearing with a rolling bearing assembly according to one of the preceding claims, wherein no lubricants are used for the lubrication of the rolling bearing assembly and/or the rolling bearing assembly is operated in vacuum.

## Revendications

1. Agencement de palier à roulement avec :
un boîtier (10),
un arbre (20),
un premier palier à roulement et un deuxième palier à roulement pour supporter de manière rotative l'arbre (20) dans le boîtier (10),
sachant que le premier palier à roulement est réalisé comme palier fixe, en disposant une bague extérieure (32) du premier palier à roulement en position fixe dans le boîtier (10) et en reliant une bague intérieure (34) du premier palier à roulement de manière fixe à l'arbre (20),
sachant que le deuxième palier à roulement est réalisé comme palier libre, en disposant la bague extérieure (42) du deuxième palier à roulement de manière déplaçable axialement dans le boîtier (10) et en reliant la bague intérieure (44) du deuxième palier à roulement de manière déplaçable axialement à l'arbre (20), **caractérisé en ce que**
tant la bague extérieure (42) que la bague intérieure (44) du deuxième palier à roulement sont poussées respectivement dans une direction axiale vers le premier palier à roulement par un moyen de précontrainte, pour empêcher la rotation de la bague extérieure (42) par rapport au boîtier (10) et la rotation de la bague intérieure (44) par rapport à l'arbre (20).

2. Agencement de palier à roulement d'après la revendication 1, sachant que les paliers à roulement sont réalisés comme roulements ajustés (*angestellte Lager*), notamment comme roulements à billes à contact oblique (30, 40) en disposition O ou en disposition X.

3. Agencement de palier à roulement d'après l'une des revendications précédentes, sachant qu'un manchon (50) régule la distance axiale entre les bagues extérieures (32, 42) des paliers à roulement premier et deuxième et/ou presse la bague extérieure (32) du premier palier à roulement par le moyen de précontrainte contre une première bague de blocage (14) disposée dans le boîtier (10), de manière que la bague extérieure (32) du premier palier à roulement soit montée de manière bloquée en rotation dans le boîtier (10).

4. Agencement de palier à roulement d'après l'une des revendications précédentes, sachant que le moyen de précontrainte de la bague extérieure (42) du deuxième palier à roulement est un premier ressort hélicoïdal (43) et que le moyen de précontrainte de la bague intérieure (44) du deuxième palier à roulement est un deuxième ressort hélicoïdal (45) qui est disposé de préférence coaxialement au premier ressort hélicoïdal (43) et ce faisant de préférence à l'intérieur du premier ressort hélicoïdal (43).

5. Agencement de palier à roulement d'après la revendication 4, sachant que le premier ressort hélicoïdal (43) présente un facteur de rappel (*Federkonstante*) supérieure à celui du deuxième ressort hélicoïdal (45).

6. Agencement de palier à roulement d'après l'une des revendications précédentes, sachant que le rapport entre le facteur de rappel du premier ressort hélicoïdal (43) et le facteur de rappel du deuxième ressort hélicoïdal (45) est compris entre environ 1,5 et environ 4, de préférence entre environ 2 et environ 3.

7. Agencement de palier à roulement d'après l'une des revendications précédentes de 4 à 6, sachant que le premier ressort hélicoïdal (43) est supporté dans le boîtier (10) et/ou que le deuxième ressort hélicoïdal (45) est supporté sur l'arbre par une bague de réglage (*Anstellring*) (46) et/ou une bague de blocage (47).

8. Agencement de palier à roulement d'après l'une des revendications précédentes, sachant que la bague extérieure (32) du premier palier à roulement est montée de manière bloquée en rotation dans le boîtier (10) par un serrage entre la première bague de blocage (14) et le manchon (50) et/ou par un ajustement serré, et que la bague intérieure (34) du premier palier à roulement formant le palier fixe est montée de manière bloquée en rotation via un ajustement serré sur l'arbre (20) et/ou que le palier libre est monté de manière axialement mobile et sans être bloquée en rotation respectivement via un ajustement de glissement dans le boîtier (10) et l'arbre (20).

9. Agencement de palier à roulement avec :
un boîtier (10),
un arbre (20),
un premier palier à roulement et un deuxième palier à roulement pour supporter de manière rotative l'arbre (20) dans le boîtier (10),
sachant que le premier palier à roulement est réalisé comme palier fixe, en disposant une bague extérieure (32) du premier palier à roulement en position fixe dans le boîtier (10) et en reliant une bague intérieure (34) du premier palier à roulement de manière fixe à l'arbre (20),
sachant que le deuxième palier à roulement est réalisé comme palier libre, en disposant la bague extérieure (42) du deuxième palier à roulement de manière déplaçable axialement dans le boîtier (10) et en reliant la bague intérieure (44) du deuxième palier à roulement de manière déplaçable axialement à l'arbre (20), **caractérisé en ce que**
la bague extérieure (42) est reliée de manière bloquée en rotation au boîtier (10), et que
la bague intérieure (44) est reliée de manière bloquée en rotation à l'arbre (20) et qu'elle est précontrainte dans la direction du premier palier à roulement.

10. Un palier de tube radiogène avec un agencement de palier à roulement d'après l'une des revendications précédentes, sachant qu'aucun lubrifiant n'est utilisé pour la lubrification de l'agencement de palier à roulement et/ou que l'agencement de palier à roulement est utilisé sous vide.
